# FASCICULE DE BREVET EUROPEEN

(11) **EP 0 780 723 B1**
(45) Date de publication et mention de la délivrance du brevet: **29.06.2005**
(21) Numéro de dépôt: 96402747.8
(22) Date de dépôt: 16.12.1996
(51) Int. Cl.: G02F 1/35, H04B 10/18

(54) **Modulateur optique réglable d'amplitude et de phase, et régénérateur de solitons comprenant un tel modulateur**
Steuerbarer Amplitude- und Phasenmodulator und Solitonregenerator mit einem solchen Modulator
Controllable phase/amplitude modulator and soliton regenerator comprising such a modulator

(30) Priorité: 21.12.1995 FR 9515282
(43) Date de publication de la demande: 25.06.1997
(73) Titulaire: ALCATEL, 75008 Paris (FR)
(72) Inventeur: Bigo, Sébastien, 91120 Palaiseau (FR); Desurvire, Emmanuel, 91680 Bruyères le Chatel (FR)
(74) Mandataire: Smith, Bradford Lee

(56) Documents cités:
- EP-A- 0 571 134
- EP-A- 0 595 207
- EP-A- 0 718 992
- IEEE PHOTONICS TECHNOLOGY LETTERS, vol. 7, no. 12, 1 Décembre 1995, pages 1441-1443, XP000547475 HAK KYU LEE ET AL: "A WALK-OFF BALANCED NONLINEAR FIBER LOOP MIRROR SWITCH"
- OPTICS LETTERS, vol. 18, no. 15, 1 Août 1993, pages 1226-1228, XP000382933 LUCEK J K ET AL: "ALL-OPTICAL SIGNAL REGENERATOR"
- ELECTRONICS LETTERS, 7 DEC. 1995, UK, vol. 31, no. 25, ISSN 0013-5194, pages 2191-2192, XP002028740 BIGO S ET AL: "Analysis of soliton in-line regeneration through two-wavelength nonlinear loop mirror as synchronous amplitude/phase modulator"
- OPTICS LETTERS, 15 APRIL 1993, USA, vol. 18, no. 8, ISSN 0146-9592, pages 583-585, XP002013501 FRANCOIS P -L ET AL: "Reduction of averaged soliton interaction forces by amplitude modulation"
- OPTICS LETTERS, vol. 21, no. 18, 15 Septembre 1996, pages 1463-1465, XP000630829 BIGO S ET AL: "DUAL-CONTROL NONLINEAR-OPTICAL LOOP MIRRORS FOR ALL-OPTICAL SOLITON SYNCHRONOUS MODULATION"
- FUMIO KOYAMA ET AL: "Frequency chirping in external modulators" JOURNAL OF LIGHTWAVE TECHNOLOGY, vol. 6, no. 1, janvier 1998 (1998-01), pages 87-93,

## Description

L'invention concerne le domaine des télécommunications sur fibre optique, et plus particulièrement des télécommunications sur des longues distances. Il est connu, pour des liaisons très longues distances à fibre optique, d'utiliser un signal de type dit "soliton" ayant des propriétés spectrales particulières qui permettent au signal de se propager sur la fibre dispersive sans dispersion chromatique appréciable, c'est-à-dire que l'on utilise la dépendance de l'indice de réfraction sur l'intensité du signal pour contrebalancer la dispersion chromatique ou vice-versa. La forme spectrale du signal est préservée malgré les effets de la distance de propagation, qui se résument ainsi principalement à des pertes de ligne. Ces pertes de ligne peuvent être compensées par une amplification optique en ligne, par exemple à l'aide d'un amplificateur à fibre dopée Erbium, ou "EDFA" en anglais.

Pour la transmission par solitons avec amplification en ligne (EDFA) les problèmes qui restent à résoudre sont connus :
1) la gigue Gordon-Haus qui cause une incertitude temporelle de l'arrivée des bits du signal ;
2) l'accumulation de bruit provenant de l'amplification de l'émission spontanée dans les amplificateurs optiques.

Différentes solutions ont été proposées et décrites dans les documents suivants qui sont expressément incorporés à la présente demande en tant que descriptions de l'art antérieur :
1) la modulation synchrone avec filtrage, D1 = H. Kubota et M. Nakazawa, (1993), "Soliton transmission control in time and frequency domaines", ILS J. Quantum Electronics v.29, n°7, pp.2189-2197, July 1993. démontre l'intérêt théorique par le calcul de cette méthode. Aucune solution pratique n'est préconisée, mais il est fait référence à une expérience de transmission à 10 Gbit/s sur 1 million de kilomètres dans D2= Nakazawa et al., (1991), "Experimental demonstration of soliton data transmission over unlimited distances with soliton control in time and frequency domains", Electronics Letters, v.29, n°9, pp.729-730, 29 avril 1993.

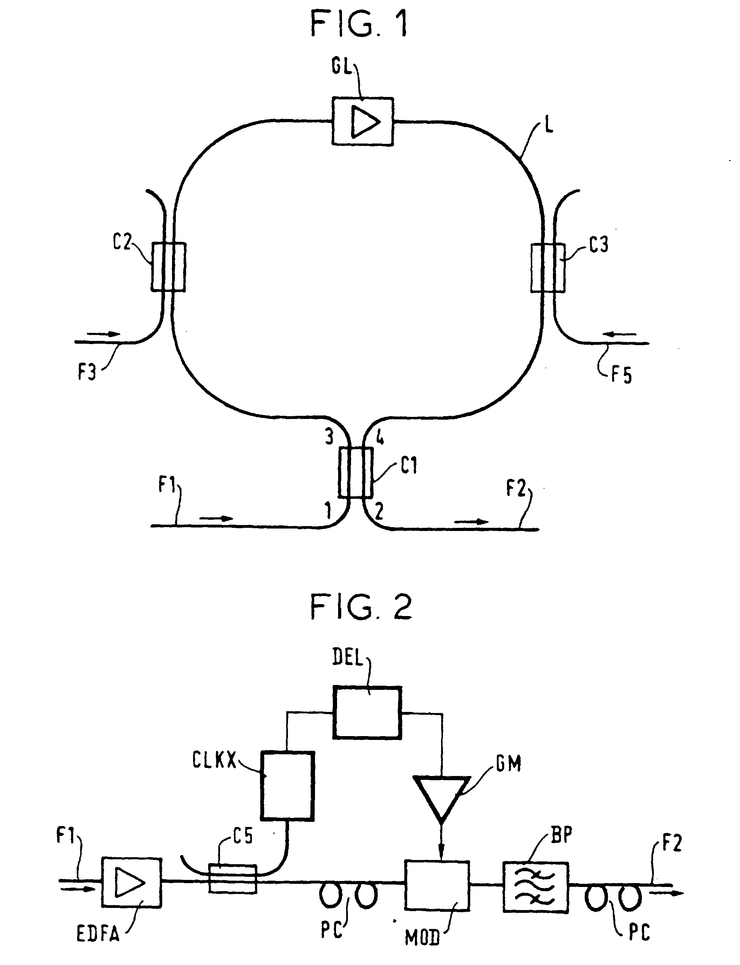

Ce document D2 enseigne l'utilisation d'un modulateur optique en LiNO₃ pour effectuer la modulation synchrone des solitons, tel que montré schématiquement sur la figure 2. Le problème avec cette solution est que le débit de signaux à régénérer ne pourra dépasser les 20 à 30 Gbit/s (10 Gbit/s dans le document D2). Le modulateur MOD en LiNO₃ est commandé par un signal électronique de commande généré dans un circuit d'horloge à partir du signal de solitons en ligne. Les moyens de récupération d'horloge comprennent un coupleur optique C5 pour l'extraction d'une partie du signal optique qui se propage entre l'entrée F1 et la sortie F2 ; un circuit d'extraction d'horloge CLKX, une ligne à retard pour fournir un délai DEL, et un amplificateur GM pour fournir la puissance de commande nécessaire pour faire fonctionner le modulateur MOD en LiNO₃. Accessoirement, la figure 2 montre un amplificateur optique d'entrée (EDFA) pour pallier les pertes d'insertion du circuit de régénération ; des dispositifs de contrôle de polarisation (PC) biréfringents ; et un filtre passe-bande BP pour resserrer la distribution spectrale de l'énergie des solitons. Certains de ces accessoires se retrouveront dans des réalisations préférées de l'invention décrites ci-après.

Par ailleurs, il est connu un système de régénération d'un signal optique ayant la forme d'un train de bits constitué d'impulsions de lumière pour les bits "1" et d'absences d'impulsions pour les bits "0" aux moments prédéterminés et connus par une horloge : D3 = J. K. Lucek et K. Smith_{,} (1993) "All optical signal regenerator", Opt. Lett. v.18, n°15, pp.1226-1228, 1 aug.1993.

D'autres documents sont utiles pour une meilleure compréhension de la présente invention, et seront introduits brièvement avec une appréciation de leurs apports dans ce but. Ces documents sont également expressément incorporés à la présente demande en tant que descriptions de l'art antérieur :

D4 = Smith , K. et Lucek, J.K. (1992) "All optical dock recovery using a mode locked laser, Elect. Lett. 28 (19) p. 1814, 10 Sept. 1992. Ce document décrit la récupération d'horloge tout optique à partir d'un signal soliton, par blocage de modes d'un laser en anneau de fibre optique via l'introduction dans l'anneau dudit signal soliton.

D5 = L.E. Adams et al., (1994) "All-optical dock recovery using a modelocked figure eight laser with a semiconductor nonlinearity"_{,} Electron. Lett., v.30, n°20, pp. 1696-97, 29 sept. 1994. Ce document enseigne l'utilisation d'un laser à blocage de modes pour la récupération toute-optique d'horloge. Une récupération d'horloge toute-optique peut être utilisée dans un dispositif de régénération de solitons utilisant un modulateur optique selon l'invention, pour fournir le(s) signal (signaux) de contrôle audit modulateur optique.

D6 = François, P.-L., et Georges, T. (1993) "Reduction of averaged soliton interaction forces by amplitude modulation", Optics Lett 18 (8), p.583 April 15, 1993. Ce document décrit une comparaison via simulation informatique de trois méthodes de modulation de signaux soliton : 1) la modulation d'amplitude uniquement ; 2) l'application de phases alternées (± π) sur des solitons successifs ; et 3) la modulation d'amplitude avec l'application de phases alternées sur des solitons successifs. La première méthode n'est efficace que pour recaler la position temporelle des impulsions solitons, afin d'éliminer la gigue Gordon Haus. La deuxième méthode est efficace pour obtenir une réduction des forces d'interactions (collisions) entre solitons voisins sur le guide de propagation. La troisième méthode obtient simultanément les avantages des deux méthodes précédentes.

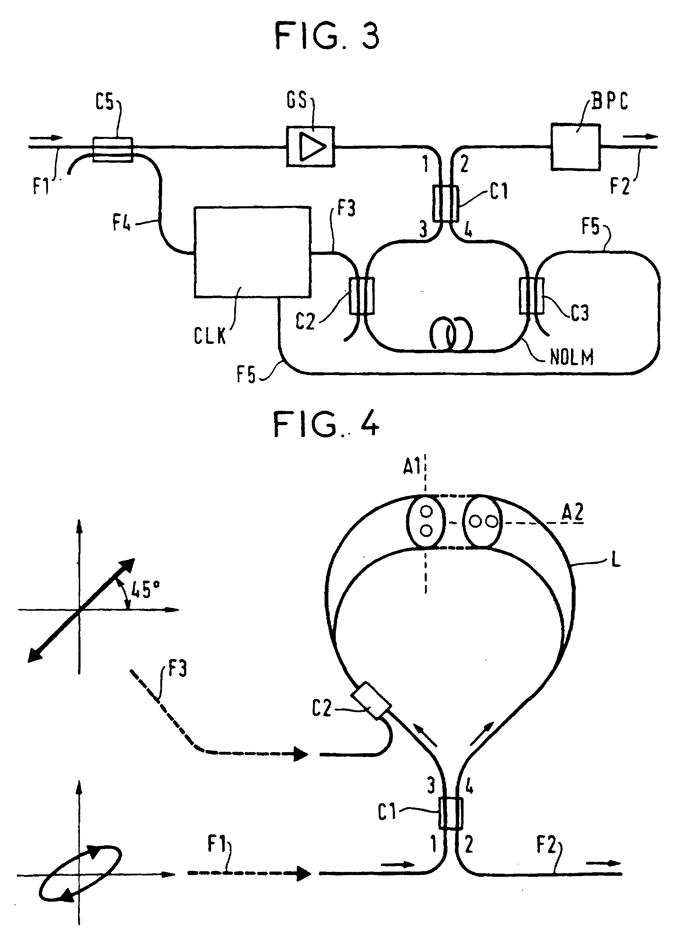

D7 = K. Uchiyama et al., (1992) "Ultrafast polarisation - independent all-optical switching using a polarisation diversity scheme in the nonlinear optical loop mirror (NOLM)", Electron. Lett., v.28, no.20, pp. 1864-1866, 24 sept. 1992. Ce document montre l'utilisation d'un NOLM comme un commutateur, qui est rendu insensible à la polarisation de la lumière du signal à commuter. Ceci est obtenu en utilisant une fibre à maintien de polarisation, que l'on aurait coupée et tournée à 90° au point médian de la boucle du NOLM. Le principe en est illustré en figure 4.

La boucle du NOLM est constituée par exemple d'une fibre à maintien de polarisation PANDA à deux trous. En effectuant une rotation de 90° entre l'axe A1 et l'axe A2 à mi-chemin de propagation, l'axe rapide (respectivement lent) de la partie gauche devient l'axe lent (respectivement rapide) de la partie droite de la boucle sur la figure 4. La fibre de la boucle (L) est dispersive en polarisation, c'est-à-dire que la vitesse de propagation de la lumière à l'intérieur de la fibre est différente pour une polarisation alignée avec l'axe rapide que pour une polarisation orthogonale à l'axe rapide de propagation, c'est-à-dire l'axe lent de la fibre. Il est nécessaire de s'affranchir de la dispersion en polarisation, ce que l'on réalise en utilisant deux longueurs identiques de fibre ayant une disposition mutuellement orthogonale des axes A1, A2 de maintien de polarisation, ce qui aura pour effet d'annuler la dispersion de polarisation.

Pour rendre le système indépendant de la polarisation du signal commuté, la polarisation du signal de contrôle qui est introduit dans la boucle L par le coupleur C2 sur la fibre d'entrée de contrôle F3 est injecté à 45° des deux axes orthogonaux A1, A2. De la même manière que précédemment, les effets de la dispersion de polarisation s'annulent.

D8 = demande de brevet français FR 94 15555 du 23.12.94, au nom d'Alcatel N.V., intitulé "Dispositif de régénération en ligne d'un signal transmis par solitons via la modulation synchrone des solitons à l'aide d'un miroir optique non-linéaire." Ce document, non encore publié à la date de la présente demande, est selon l'avis de la Demanderesse, le document le plus proche de l'art antérieur pour apprécier l'apport de la présente invention.

Le dispositif décrit dans D8 opère la régénération de solitons en ligne par la modulation synchrone de ces solitons utilisant un miroir optique non linéaire (NOLM) comme modulateur optique, ce modulateur NOLM étant commandé par un signal d'horloge récupéré du signal soliton par des moyens de récupération d'horloge qui peuvent être des moyens tout-optiques ou des moyens électrooptiques. Le NOLM comprend un coupleur d'entrée C1 qui peut être un coupleur 50/50 ou un coupleur dissymétrique. Ledit coupleur d'entrée C1 peut être un coupleur 2x2 ou 3x3. Selon une réalisation particulière, le système de régénération comprend en outre une pluralité d'amplificateurs optiques et une pluralité de filtres dits des filtres guidants. L'application visée serait, comme dans le cas de la présente invention, les télécommunications optiques sur grandes distances par solitons.

Ce document D8 enseigne l'utilisation d'une récupération d'horloge optique par blocage de modes d'un laser à fibre en anneau, comme D4, dans un NOLM fonctionnant de façon indépendante de la polarisation du signal de contrôle selon l'enseignement du D7, mais comme modulateur optique et non pas comme commutateur optique (tel que prévu en D3 et D7).

Le modulateur optique enseigné par le document D8 est principalement un modulateur d'amplitude, mais qui introduit inévitablement une composante de modulation de phase plus ou moins importante, qui dépend de la forme et de l'amplitude relative du signal de commande introduit dans le NOLM. En effet, cette modulation de phase n'est pas néfaste en soi, mais du fait qu'il n'est pas possible de l'optimiser de façon indépendante, la modulation de phase introduit un effet de "chirp", mot anglais qui désigne la dépendance de l'importance de la modulation de phase sur la fréquence de l'onde modulée, d'où un effet néfaste pour la composition spectrale des solitons ainsi modulés.

D9 = Hak Kyu Lee et al., "A walk off balanced NFLM switch controlled by 1.5 µm pulses for high bit rate 1.3 µm telecommunications, Proc. 21st Eur Conf. on Opt. Comm. (ECOC '95), Brussels, p. 401. Ce document D9 enseigne l'utilisation de deux entrées contrôle dans un NOLM pour éviter un glissement de phase ("walk off") entre le signal contrôle et le signal à commuter. Le NOLM ici ne joue que le rôle d'un commutateur (tout comme D3, D7) et non pas d'un modulateur (comme dans D8 et la présente invention). Les signaux d'horloge présentés sur les entrées contrôle ne sont pas déphasés comme dans cet art antérieur.

L'invention a pour but de pallier les problèmes de l'art antérieur.

Un modulateur d'amplitude selon le préambule de la revendication 1 est connu du document Electronics Letters, 7 Dec. 1995, UK, vol. 31, No. 25, ISSN 0013-5194, pages 2191-2192, Bigo S. et al. : « Analysis of soliton in-line regeneration through two-wavelength nonlinear loop mirror as synchronous amplitude/phase modulator ».

Ainsi, l'invention propose modulateur d'amplitude de signaux optique comprenant un miroir non-linéaire en boucle NOLM, ledit NOLM comprenant une boucle L de fibre optique, ladite boucle L ayant une entrée signal et une sortie signal, un premier coupleur optique C1 d'entrée / sortie signal ayant un coefficient de couplage de ξ/(1 - ξ) pour coupler ladite entrée et ladite sortie à ladite boucle L, une première entrée contrôle et un deuxième coupleur optique C2 pour coupler ladite première entrée contrôle à ladite boucle L afin de permettre l'injection d'un premier signal optique de contrôle dans ladite boucle L dans une première direction de propagation, des moyens pour fournir lesdits signaux optiques à moduler sur ladite entrée signal de ladite boucle L, et des moyens de récupération d'horloge pour former à partir desdits signaux optiques à moduler un signal d'horloge formant ledit premier signal optique de contrôle caractérisé en ce qu'il comprend, en outre, une deuxième entrée contrôle et un troisième coupleur optique C3 afin de permettre l'injection d'un deuxième signal optique de contrôle dans ladite boucle L dans une deuxième direction de propagation différente de ladite première direction, et en ce que lesdits moyens de récupération d'horloge sont destinés à former à partir desdits signaux optiques à moduler ledite deuxième signal optique de contrôle.

Selon une réalisation avantageuse, ledit modulateur optique comprend en outre des moyens ΔA pour ajuster l'amplitude relative desdits premier et deuxième signaux optiques de contrôle. Selon une réalisation préférée, ledit modulateur optique comprend en outre des moyens ΔΦ pour ajuster la phase relative desdits premier et deuxième signaux optiques de contrôle.

Selon une variante, ledit modulateur optique comprend en outre au moins une source optique pour générer desdits premier et deuxième signaux optiques de contrôle. Selon une réalisation préférée, ladite au moins une source optique est apte à générer un signal périodique de contrôle sinusoïdal. Selon une réalisation préférée, ladite au moins une source optique est une source unique, et en ce que ledit modulateur comprend en outre un quatrième coupleur optique C4 permettant de diviser ledit signal périodique de contrôle en deux pour créer ainsi lesdits premier et deuxième signaux optiques de contrôle.

L'invention propose également une méthode de régénération de solitons dans laquelle des solitons à régénérer sont injectés sur l'entrée signal d'un NOLM via un premier coupleur optique d'entrée / sortie ayant un coefficient de couplage de ξ/(1-ξ) tandis qu'un premier signal optique de contrôle est injecté dans le NOLM dans une première direction de propagation via un deuxième coupleur optique afin de moduler lesdits solitons par ledit premier signal optique de contrôle et fournir lesdits solitons ainsi modulés via ledit premier coupleur optique, caractérisée en ce que un deuxième signal optique de contrôle est injecté dans le NOLM dans une deuxième direction de propagation via un troisième coupleur optique, la deuxième direction de propagation étant différente de la première, et lesdits premier et deuxième signaux optiques de contrôle étant des signaux d'horloge formés à partir des solitons à régénérer et ayant un déphasage relatif approximativement de π.

Selon une réalisation préférée, lesdits premier et deuxième signaux optiques ont une forme sinusoïdale.

L'invention concerne en outre l'utilisation d'un dispositif de modulateur optique selon l'une quelconque des variantes énumérées ci-dessus, soit pour la régénération de solitons, soit pour la modification des caractéristiques spectrales d'impulsions ("chirp").

L'invention sera mieux comprise, avec ses différentes caractéristiques et avantages, à la lumière de la description détaillée qui suit, avec ses dessins annexés, dont :
- la figure 1, qui montre schématiquement un exemple d'un miroir non linéaire optique (NOLM), modifié par l'adjonction d'un deuxième entrée contrôle et apte à être utilisé dans un modulateur optique selon l'invention ;
- la figure 2, déjà décrite, qui montre schématiquement un dispositif de modulation synchrone de solitons, connu de l'art antérieur par le document D2 ;
- la figure 3, qui montre schématiquement un exemple d'une réalisation selon l'invention d'un dispositif de modulation synchrone de solitons dans lequel le modulateur est un NOLM à deux entrées contrôle ;
- la figure 4, déjà décrite, qui montre schématiquement un commutateur NOLM insensible à la polarisation du signal à commuter, tel que connu de l'art antérieur par le document D7 ;
- la figure 5, qui montre schématiquement un exemple d'un dispositif de récupération optoélectronique d'horloge d'un signal optique selon des principes connus de l'homme de l'art ;
- la figure 6, qui montre schématiquement la transmittance d'un NOLM de l'art connu, ainsi que la phase du signal de contrôle, en fonction de temps pour une puissance du signal de contrôle P_{C} de l'ordre de 20 % de la puissance P_{π} requise pour une commutation maximale ;
- la figure 7, qui montre schématiquement un exemple d'un dispositif de modulateur optique selon l'invention ;
- les figures 8A et 8B qui montrent schématiquement un exemple des formes d'ondes du signal soliton et des deux signaux de contrôle, respectivement aux points A et B du NOLM dans le modulateur de la figure 7, les signaux de contrôle ayant la même fréquence que le signal soliton ;
- les figures 9A et 9B qui montrent schématiquement un exemple des formes d'ondes du signal soliton et des deux signaux de contrôle, respectivement aux points A et B du NOLM dans le modulateur de la figure 7, les signaux de contrôle ayant une fréquence égale à la moitié de la fréquence que le signal soliton ;
- la figure 10 qui montre l'effet des interactions entre solitons via des résultats de simulation numérique du facteur de qualité Q en fonction de la longueur de liaison D sur des distances transocéaniques, pour un signal psuedo-aléatoire et pour un signal composé d'un train de bits en simple alternance, pour la modulation d'intensité uniquement ainsi que pour la modulation de phase et d'amplitude à l'aide d'un NOLM à deux entrées contrôle selon l'invention, avec P_{C}/P_{π} = 0,2 sur chaque entrée ;
- la figure 11 qui montre des résultats de simulation numérique du facteur de qualité Q en fonction de la longueur de liaison D sur des distances transocéaniques, pour différentes valeurs de la puissance de contrôle P_{C} d'un NOLM à contrôle unique, et pour un modulateur d'intensité, suivi d'un filtre optimal;
- la figure 12, qui montre schématiquement la transmittance d'un NOLM à deux contrôles selon l'invention, ainsi que la phase du signal de contrôle, en fonction de temps pour différentes valeurs de la puissance du signal de contrôle P_{C} comparées à la puissance P_{π} requise pour une commutation maximale ;
- la figure 13 qui montre des résultats de simulation numérique du facteur de qualité Q en fonction de la longueur de liaison D sur des distances transocéaniques, pour différentes valeurs de la puissance de contrôle P_{c} appliquées à un NOLM classique à un seul contrôle selon l'art connu ;
- la figure 14 qui montre des résultats de simulation numérique du facteur de qualité Q en fonction de la longueur de liaison D sur des distances transocéaniques, pour différentes valeurs de la puissance de contrôle P_{c} appliquées en opposition de phase sur les deux entrées contrôle d'un NOLM du modulateur optique selon l'invention.

Les dessins sont donnés à titre d'exemples non limitatifs, dans le but d'illustrer les principes de l'invention et de quelques variantes. Sur toutes les figures, les mêmes repères se référent aux mêmes éléments, et l'échelle n'est pas toujours respectée pour des raisons de clarté.

La figure 1 montre schématiquement un exemple d'un miroir non linéaire optique (NOLM) apte à être utilisé dans un modulateur optique selon l'invention. De manière générale, un NOLM comprend une boucle de fibre optique L ; un premier coupleur optique C1 avec ses quatre portes 1, 2, 3, 4, ce coupleur C1 ayant un coefficient de couplage ξ/(1-ξ) qui décrit le partage de puissance optique entre les différentes portes ; et un deuxième coupleur optique C2 pour injecter un premier signal de contrôle dans le NOLM via une première fibre optique de contrôle F3.

Ce qui caractérise le NOLM du modulateur optique de l'invention c'est l'adjonction d'une deuxième entrée contrôle via un troisième coupleur optique C3 qui permet d'injecter un deuxième signal de contrôle via une deuxième fibre de contrôle F5. Ce deuxième signal de contrôle sera injecté dans la boucle du NOLM dans une direction de propagation opposée à celle dudit premier signal de contrôle.

L'adjonction éventuelle d'un amplificateur optique GL dans la boucle peut conférer un gain positif à l'ensemble, ce qui en fait un miroir non linéaire amplificateur (NALM) ; ou bien un tel amplificateur peut compenser les pertes d'insertion pour conférer un gain d'unité à l'ensemble.

Le signal optique à commuter par le NOLM est introduit par la fibre d'entrée F1 à la porte 1 du coupleur C1. Décrivons tout d'abord le cas d'un coefficient de couplage ξ/(1-ξ) du coupleur C1 de 50/50, en l'absence d'un signal de contrôle sur la fibre F3. Dans ce cas, 50 % de la puissance dudit signal optique se trouve sur la porte 4, tandis que l'autre 50 % se trouve sur la porte 3 du coupleur C1, mais avec un déphasage relatif de π/2 radians (90°) entre les deux. Les deux signaux se propagent donc dans des sens opposés dans la boucle de fibre, qui aura une longueur de l'ordre de 5 à 10 kms. Puisque les chemins optiques des deux signaux sont identiques, les signaux arrivent sur les portes 3, 4 respectivement du coupleur C1, où ils interfèrent. Le coupleur C1 introduit encore un déphasage relatif de ± π/2.

Puisque les deux signaux sont maintenant déphasés de ±π ou 0, il y a interférence destructive (déphasage de ±π) pour l'onde résultante dirigée vers la porte 2 du coupleur C1, donc il n'y a pas de transmission du signal vers la fibre de sortie F2. En revanche, l'interférence est constructive (déphasage 0) pour l'onde résultante dirigée vers la porte 1 du coupleur C1, donc le signal présenté sur la porte 1 est totalement réfléchi par le miroir NOLM vers la porte 1 dans ce cas.

Maintenant considérons le cas où il y a un signal de contrôle présent sur la fibre optique de contrôle F3. Ce signal sera couplé dans la boucle du NOLM par le coupleur optique C2, et se propagera dans la boucle dans le sens des aiguilles d'une montre. Les ondes du signal qui circulent dans la boucle en sens contraire ne seront pas ou très peu affectées par la présence d'un signal de contrôle. En revanche, les ondes du signal qui se propagent dans le même sens dans la boucle seront perturbées. En effet, la fibre de la boucle L présente un effet non linéaire, qui change l'indice de réfraction de la fibre en fonction de la puissance optique, ou plus exactement en fonction de l'amplitude du champ électrique dans la fibre (effet Kerr). Les champs électriques des ondes circulant ensemble, dites "en co-propagation", se superposent de façon linéaire, donc l'intensité résultante du champ électrique est plus grande que celle des ondes se propageant dans l'autre sens dans la boucle L.

L'indice de réfraction effective de la boucle L vue par les ondes en co-propagation est différente de celle vue par les ondes en contre-propagation. Leurs vitesses de propagation sont donc différentes. Leurs temps d'arrivée sur le coupleur C1 sont différents, donc ces ondes n'interfèrent pas ou peu. La totalité de la puissance optique ou presque se trouve sur la porte 2 du coupleur C1, véhiculée sur la fibre optique de sortie F2.

Ainsi, la présence d'un signal de contrôle sur la fibre de contrôle F3 est capable de commander la commutation du miroir optique non linéaire, qui sera transparent en présence du signal de contrôle, et qui sera réfléchissant en l'absence d'un signal de contrôle. La commutation peut être très rapide, de l'ordre de 100 GHz au moins. L'insertion d'un élément biréfringent dans la boucle du NOLM peut inverser les caractéristiques de commutation, pour rendre le miroir transparent en l'absence du signal de contrôle, et réfléchissant en présence d'un signal de contrôle.

Le NOLM tel que décrit jusqu'à maintenant est conforme à celui de l'art antérieur, qui peut être utilisé par exemple dans un dispositif de régénération de solitons par commutation à l'aide d'un NOLM d'un signal d'horloge, tel que décrit dans le document D3.

Pour pallier les inconvénients de l'art antérieur et notamment pour permettre la régénération de solitons par modulation synchrone d'amplitude et de phase, avec possibilité de contrôler indépendamment la modulation de phase en fonction de la fréquence ("chirp" en anglais), l'invention propose un dispositif de modulateur optique comprenant un NOLM ayant une deuxième entrée contrôle F5 tel que montré schématiquement sur la figure 1, alors que dans l'art antérieur le NOLM n'a qu'une seule entrée contrôle.

Le fonctionnement du deuxième signal de contrôle est identique à celui décrit ci-dessus pour le premier signal de contrôle, à la direction de propagation près. En effet, le deuxième signal de contrôle sera injecté dans la boucle L du NOLM dans l'autre sens, c'est à dire dans le sens contraire des aiguilles d'une montre. L'effet Kerr induit par ce deuxième signal de contrôle s'exerce d'avantage donc sur la partie du signal soliton en co-propagation avec ce deuxième signal de contrôle, c'est-à-dire la partie du signal soliton introduit dans la boucle L du NOLM via la porte 4.

Il est ainsi facile de comprendre la différence fondamentale entre le dispositif de l'art antérieur et celui proposé dans le cadre de l'invention. Dans le NOLM de l'art antérieur, la partie du signal soliton qui entre dans la boucle du NOLM par la porte 3 est modulé par le signal de contrôle en co-propagation, et interfère avec la partie du signal soliton entrée par la porte 4, non-perturbée par le signal de contrôle. Dans le dispositif selon l'invention, en revanche, la partie du signal soliton entrée dans la boucle via la porte 4 est soumise à son tour à une modulation par le deuxième signal de contrôle. On se donne ainsi des moyens pour agir sur deux paramètres indépendants avec deux signaux de contrôle indépendants.

Dans le dispositif montré sur la figure 3, et tel que décrit en partie dans le document D8 pour le NOLM classique, le signal optique de type soliton à régénérer arrive par la fibre optique d'entrée F1, où un coupleur optique C5 prélève une partie du signal pour en extraire un signal d'horloge par les moyens de récupération d'horloge CLK. Ensuite, ces moyens CLK appliquent ledit signal optique d'horloge sur la première entrée de contrôle du NOLM via le coupleur C2. Le signal soliton sera toujours à la même longueur d'onde λ_{S}. La longueur d'onde λ_{C} du signal d'horloge sera de préférence légèrement différente de celle du signal soliton λ_{S,} pour permettre le filtrage bloquant de l'horloge en sortie du dispositif par un filtre passe-bande BPC dont la bande passante est centrée sur la longueur d'onde λ_{S} du soliton.

En aval du coupleur de prélèvement C5, le signal soliton continue à se propager sur la fibre optique d'entrée F1 jusqu'à la porte d'entrée 1 du coupleur C1 du NOLM. Selon une variante de l'invention, un amplificateur optique GS peut être placé en amont du miroir NOLM pour compenser les pertes en ligne subies par le soliton depuis la dernière fois qu'il a été amplifié ou régénéré.

Le fonctionnement du NOLM est similaire à ce qui a été décrit ci-dessus en référence à la figure 1. Les solitons arrivant à la porte 1 du coupleur C1 du NOLM sont ainsi modulés par le premier signal d'horloge appliqué à l'entrée de contrôle F3 via le coupleur de contrôle C2. Les temps de trajet de l'horloge et des solitons selon leurs trajets respectifs doivent éventuellement être ajustés selon les règles de l'art, pour permettre la synchronisation de ces signaux quand ils circulent dans le NOLM.

Le signal soliton est ainsi modulé par l'enveloppe du signal d'horloge, ce qui permet de procurer une modulation d'amplitude des solitons. En effet, la modulation d'amplitude est jugée suffisante pour diminuer, voire éliminer la gigue Gordon-Haus à la sortie du dispositif de régénération.

Il est préférable d'utiliser une fibre à maintien de polarisation pour la réalisation du NOLM de l'invention, conformément à la figure 4, déjà décrite. On s'arrange pour injecter le signal optique d'horloge dans le NOLM via le coupleur C2 avec son axe de polarisation orienté à 45° par rapport aux axes A1, A2 de maintien dans la fibre de boucle L. Le fonctionnement du dispositif est ainsi insensible à la polarisation du signal soliton à moduler, ce qui constitue un avantage majeur par rapport aux réalisations de l'art antérieur, et en particulier celles où le signal soliton constitue le signal de commande du miroir NOLM, car ce signal aura une polarisation arbitraire, inconnue, et ne pouvant être maîtrisée. La sensibilité du NOLM à la polarisation du signal peut donc nuire aux performances de ce dispositif de l'art antérieur.

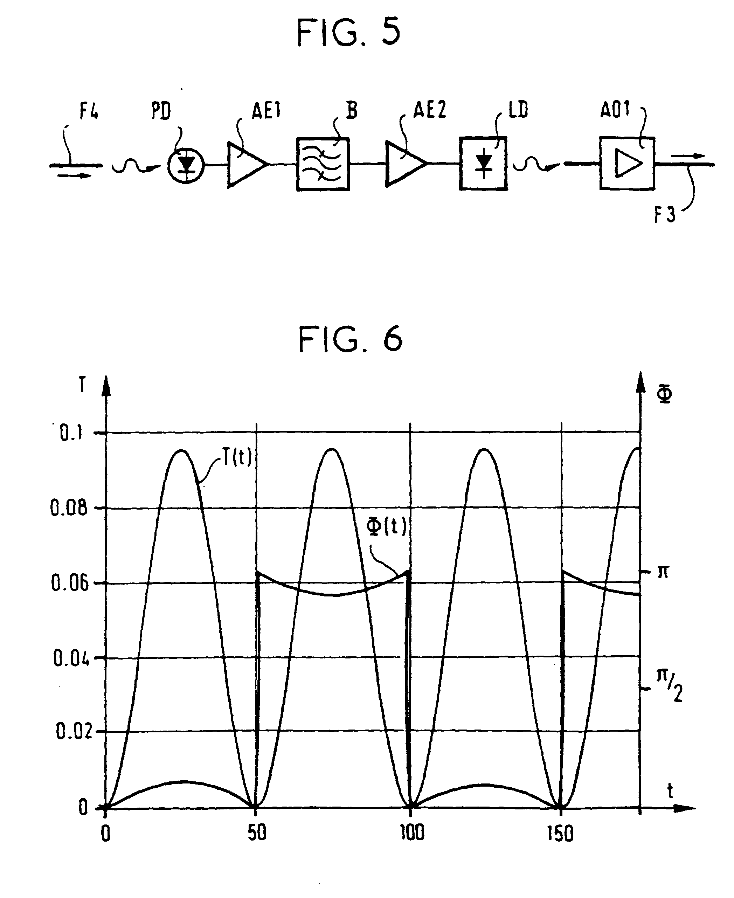

Les moyens CLK de récupération d'horloge peuvent être soit des moyens tout optiques, soit des moyens optoélectroniques (voir figure 5). La figure 5 montre schématiquement un exemple d'un dispositif de récupération optoélectronique d'horloge d'un signal optique selon des principes connus de l'homme de l'art. Le signal optique prélevé par le coupleur de prélèvement C5 de la figure 3 se propage sur la fibre optique F4 jusqu'à un photodétecteur PD qui convertit le signal optique en signal électronique. Le signal électronique ainsi obtenu est d'abord amplifié par l'amplificateur électronique hyperfréquence AE1, puis dans le cas d'un signal NRZ (non return to zero en anglais), le signal sera filtré par un premier filtre passe-bande B. Le signal est alors amplifié pour commander un laser diode LD, qui émet un signal lumineux au rythme des impulsions électroniques qui sont les résultats des signaux optiques prélevés en C5. Ce signal optique peut éventuellement être amplifié par un amplificateur optique AO1 avant d'être appliqué à l'entrée de commande du NOLM via la fibre de commande F3 et le coupleur C2 de la figure 3.

La figure 6 montre la transmittance T et la phase π d'un NOLM classique quand la puissance du signal de contrôle Pc/Pπ = 0.2. Cette valeur de puissance de contrôle donne une transmittance T presque sinusoïdale, mais introduit un chirp qui est visible sur cette figure. Le chirp correspond aux variations de phase de quelques dégrées constatées lors de chaque période de la sinusoïde de transmittance. Dans les dispositifs connus de l'art antérieur, ce chirp ne peut être contrôlé, ce qui le rend gênant pour certaines conditions de transmission. Par exemple, un chirp introduit à la régénération peut améliorer la transmission s'il est égal mais opposé au chirp introduit par la ligne de transmission optique (fibre optique). Mais ce dernier dépend de la longueur de la liaison, en plus des caractéristiques de propagation sur la ligne, ce qui impose une longueur optimale de liaison entre régénérateurs. Pour s'affranchir de cette contrainte, il serait préférable de pouvoir contrôler, de façon indépendante, le chirp introduit par le modulateur optique.

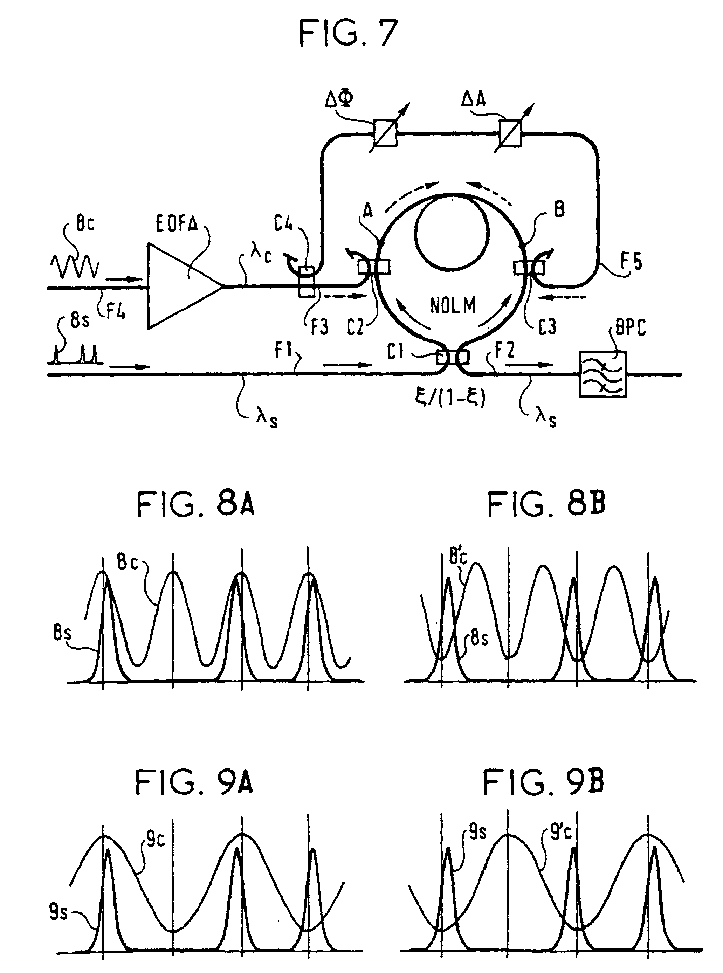

La figure 7 montre schématiquement un exemple d'une réalisation préférée d'un dispositif de modulateur optique selon l'invention Comme dans le dispositif de la figure 3, le signal optique de type soliton à régénérer, de longueur d'onde λ_{S}, arrive par la fibre optique d'entrée F1, et est introduit dans la boucle du NOLM via le coupleur C1. Un signal d'horloge de longueur d'onde λ_{C}, de préférence sinusoïdal, est généré par des moyens de récupération d'horloge (non-montrés) et introduit, sur la fibre optique d'entrée contrôle F4, et éventuellement amplifié par un amplificateur optique EDFA. Dans cette réalisation avantageuse, le signal d'horloge est divisé par un coupleur optique C4 pour fournir les deux signaux de contrôle qui seront appliqués sur la première entrée de contrôle du NOLM via le coupleur optique C2, et sur la deuxième entrée de contrôle via le coupleur optique C3. Le signal soliton sera toujours à la même longueur d'onde λ_{S}, y compris sur la fibre de sortie du dispositif F2. La longueur d'onde λ_{C} du signal d'horloge sera de préférence légèrement différente de celle du signal soliton λ_{S}, pour permettre le filtrage bloquant de l'horloge en sortie du dispositif par un filtre passe-bande BPC dont la bande passante est centrée sur la longueur d'onde λ_{S} du soliton.

Selon une variante préférée de l'invention, des moyens ΔA sont prévus pour ajuster l'amplitude du deuxième signal de contrôle, ainsi que des moyens de déphasage ΔΦ pour ajuster la phase relative entre les deux signaux de contrôle.

Dans l'exemple présenté sur la figure 7, les moyens de récupération d'horloge fournissent un signal d'horloge ayant une fréquence égale à la fréquence bit nominale des solitons dans le signal à régénérer. Cependant, la gigue Gordon Haus introduit un déphasage aléatoire entre les solitons et l'horloge qui est montré sur les figures 8A et 8B. Les courbes présentées sur les figures 8A et 8B montrent schématiquement un exemple des formes d'ondes du signal soliton 8s et des deux signaux de contrôle 8c, 8'c respectivement aux points A et B du NOLM dans le modulateur de la figure 7, les signaux de contrôle ayant la même fréquence que le signal soliton. Dans une configuration préférée telle que montrée sur ces figures, les deux signaux de contrôle présentent un déphasage relatif de π.

Les figures 9A et 9B montrent schématiquement un exemple des formes d'ondes du signal soliton et des deux signaux de contrôle, respectivement aux points A et B du NOLM dans le modulateur de la figure 7, les signaux de contrôle ayant une fréquence égale à la moitié de la fréquence du le signal soliton. En effet, pour minimiser l'effet des interactions entre solitons voisins lors de leur propagation sur des longues distances, il est connu par exemple par le document D6, d'utiliser un signal d'horloge ayant une inversion de phase entre des solitons successifs sur un train de bits. Pour ce faire, on peut par exemple prélever un signal d'horloge ayant une fréquence f_{C} moitié de la fréquence f_{S} du signal soliton : f_{C} = f_{S}/2. Comme dans les figures 8A, 8B, les formes d'ondes du signal soliton 9s et des deux signaux de contrôle 9c, 9'c respectivement aux points A et B du NOLM dans le modulateur de la figure 7, les signaux de contrôle ayant la même fréquence que le signal soliton. Comme dans le cas précédent, les deux signaux de contrôle présentent un déphasage relatif de π.

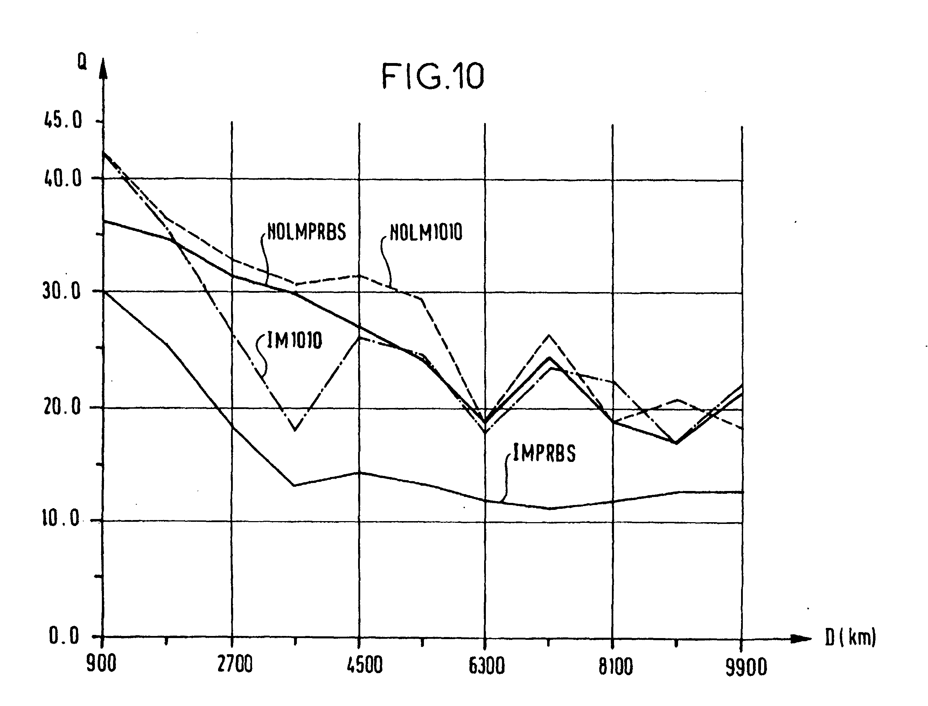

Les effets d'interactions entre solitons sont illustrés sur la figure 10, qui montre des résultats de simulation numérique du facteur de qualité Q en fonction de la longueur de liaison D sur des distances transocéaniques pour quatre cas :
. un signal pseudo-aléatoire régénéré avec la modulation d'intensité uniquement (IMPRBS) ;
. un signal composé d'un train de bits en simple alternance 1010..., régénéré avec la modulation d'intensité uniquement (IM1010) ;
. un signal composé d'un train de bits en simple alternance 1010..., régénéré avec la modulation de phase et d'amplitude à l'aide d'un NOLM à deux entrées contrôle selon l'invention (NOLM1010), avec P_{C}/P_{π} = 0,2 sur chaque entrée ;

un signal pseudo-aléatoire régénéré avec la modulation de phase et d'amplitude à l'aide d'un NOLM à deux entrées contrôle selon l'invention (NOLMPRBS), avec P_{C}/P_{π} = 0,2 sur chaque entrée.

On constate sur la figure que la facteur de qualité des séquences de bits alternés est supérieur, en général, à celle des séquences pseudo-aléatoires pour les deux types de modulation. La raison en est que des collisions entre solitons voisins n'existent pas pour des séquences alternées, contrairement aux séquences pseudo-aléatoires. Les collisions éventuelles entre des bits voisins des séquences pseudo-aléatoires diminuent la facteur de qualité Q. En revanche, on voit également que l'effet des collisions est nettement diminué pour le cas d'une modulation d'amplitude et de phase via un NOLM à deux entrées de contrôle selon l'invention, comparé au cas d'une modulation d'intensité uniquement. Ceci constitue l'un des avantages de l'utilisation d'un NOLM à deux entrées de contrôle par rapport à l'art antérieur.

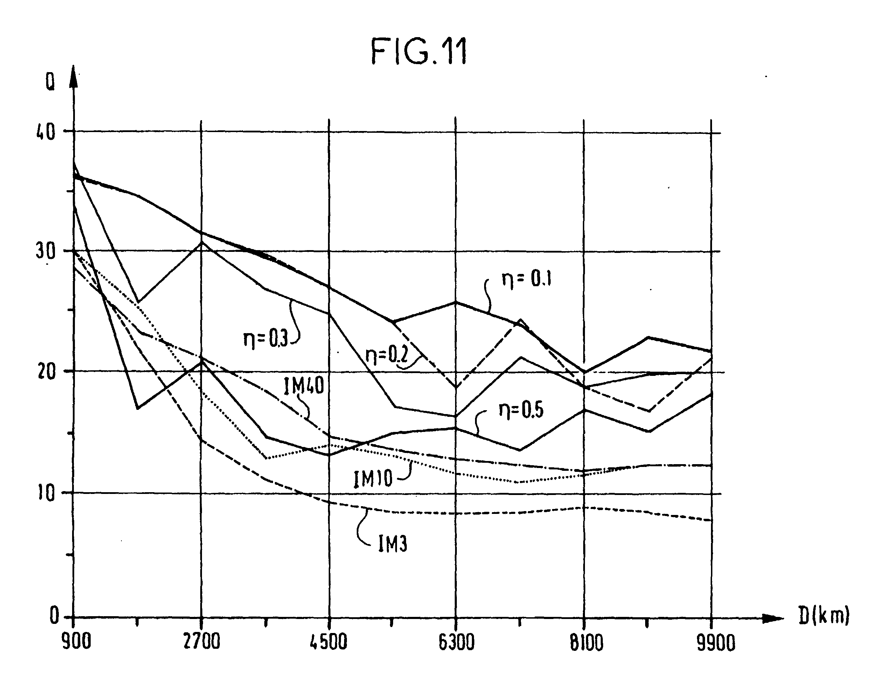

Les simulations des figures 10 et 11 ont été effectuées en utilisant des valeurs identiques des paramètres suivants :

| | |
|---|---|
| débit | B = 20 Gbit/s, |
| distance entre amplificateurs | zₐ = 45 km |
| distance entre régénérateurs | zᵣ = 450 km, un filtre par régénérateur |
| dispersion de la fibre | Δt_{g} = 0.25 ps/nm-km |
| puissance du soliton | Pᵢₙ = 1.0 (puissance nominale soliton) |
| largeur d'impulsion soliton | Δt_{FWHM} = 10 ps |
| taux de couplage d'entrée | ξ = 50 % |

La figure 11 montre des résultats de simulation numérique du facteur de qualité Q en fonction de la longueur de liaison D sur des distances transocéaniques, pour différentes valeurs de la puissance de contrôle P_{C} / P_{π} d'un NOLM à contrôle unique, ainsi que pour un modulateur d'intensité suivi d'un filtre optimal. On constate que pour toutes valeurs de η = P_{C}/P_{π}, dont les résultats sont montrés sur les courbes η = 0,1, η = 0,2, η = 0,3, η = 0,5, il y a une amélioration de la qualité Q pour les liaisons très longue distance, par rapport aux courbes IM40, IM10, et IM3, qui représentent des modulations d'intensité de 40 dB, 10 dB, et 3 dB respectivement. En revanche, on voit également que l'amélioration est sensible à la puissance du signal de contrôle, et que l'amélioration de Q est plus importante pour des puissances de contrôle plus faibles. Il y a un autre inconvénient d'un tel dispositif, dans sa sensibilité importante aux conditions d'environnement (température, vibrations, etc.).

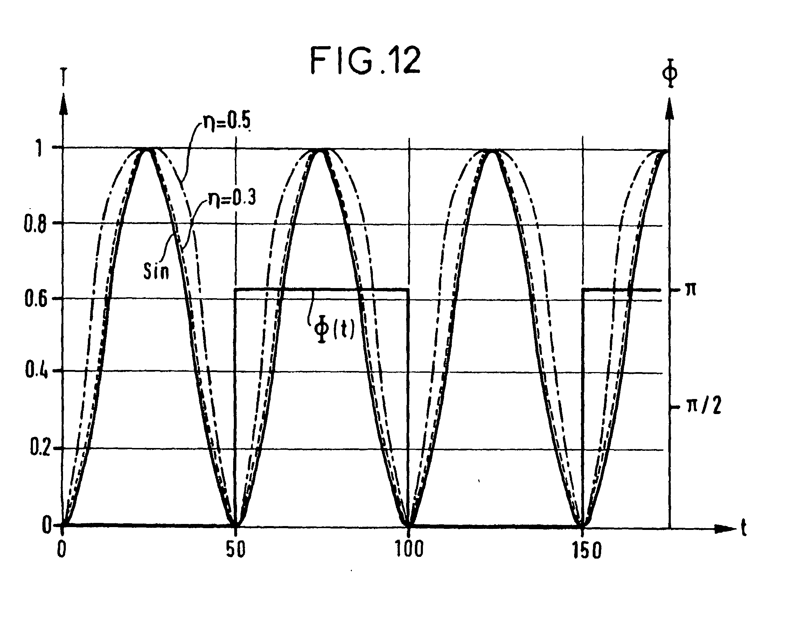

La figure 12 montre schématiquement la transmittance T d'un NOLM à deux contrôles selon l'invention, ainsi que la phase Φ du signal de contrôle, en fonction de temps pour différentes valeurs de la puissance du signal de contrôle P_{C} comparées à la puissance P_{π} (η = P_{C} / P_{π}) requise pour une commutation maximale. La fréquence f du signal de contrôle est égale à la moitié de la fréquence bit du signal : f = f_{S} / 2. On constate que pour η = 0,5, la transmittance est quasi-sinusoïdale. Pour η = 0,3, la transmittance est encore plus proche d'un sinusoïde. Pour η = 0,2, la transmittance se confond avec un sinusoïde.

Une comparaison de la figure 12 avec la figure 6 fait ressortir un autre avantage du dispositif selon l'invention : la phase Φ est pratiquement constante (pas de "chirp") pendant toute la période d'horloge, soit à une valeur π, soit à une valeur 0.

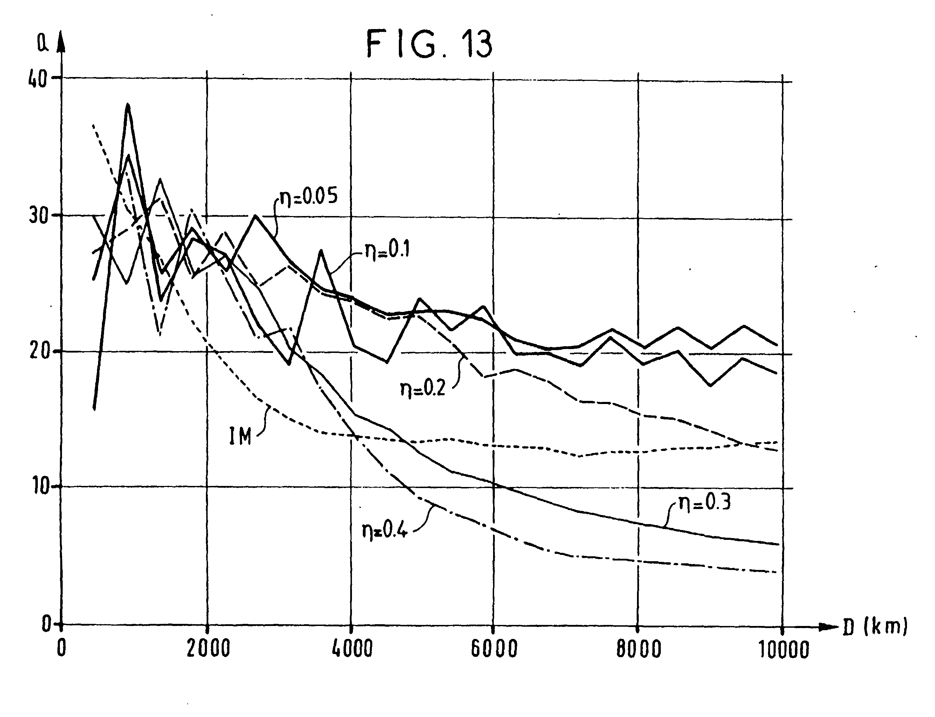

La figure 13 montre des résultats de simulation numérique du facteur de qualité Q en fonction de la longueur de liaison D sur des distances transocéaniques, de l'ordre de 10 000 km, pour différentes valeurs de la puissance de contrôle P_{C} ; c'est-à-dire pour différent valeurs de l'efficacité de commutation η = P_{C}/P_{π}, dans le cas d'un NOLM classique à un seul contrôle. Les résultats de simulation montrent encore une fois que les valeurs de η les plus faibles sont les plus avantageuses pour obtenir la meilleure qualité Q sur des liaisons de longue distance. Une courbe lM donnant les résultats pour la modulation d'intensité uniquement est donnée à titre de comparaison.

La simulation de la figure 13 utilise les mêmes valeurs des paramètres que les simulations des figures 10 et 11 : débit de 20 Gbit/s, liaison de D km composée d'une pluralité de tronçons de 45 km avec des amplificateurs optiques EDFA disposés entre les tronçons pour un total de 9900 kms. L'atténuation de fibre est fixée à α = 0,23 dB/km, et la dispersion chromatique d'une fibre classique est fixée à Δλt_{g} = 0,25 ps/nm/km. A chaque amplificateur EDFA, le bruit ASE (amplification d'émission spontanée) est ajouté au signal, et le gain est ajusté pour fournir une puissance constante. Le signal est PRBS (acronyme anglais pour signal de bits pseudo-aléatoire) de 128 bits de 10 ps codés en impulsions soliton ayant la forme sech² classique.

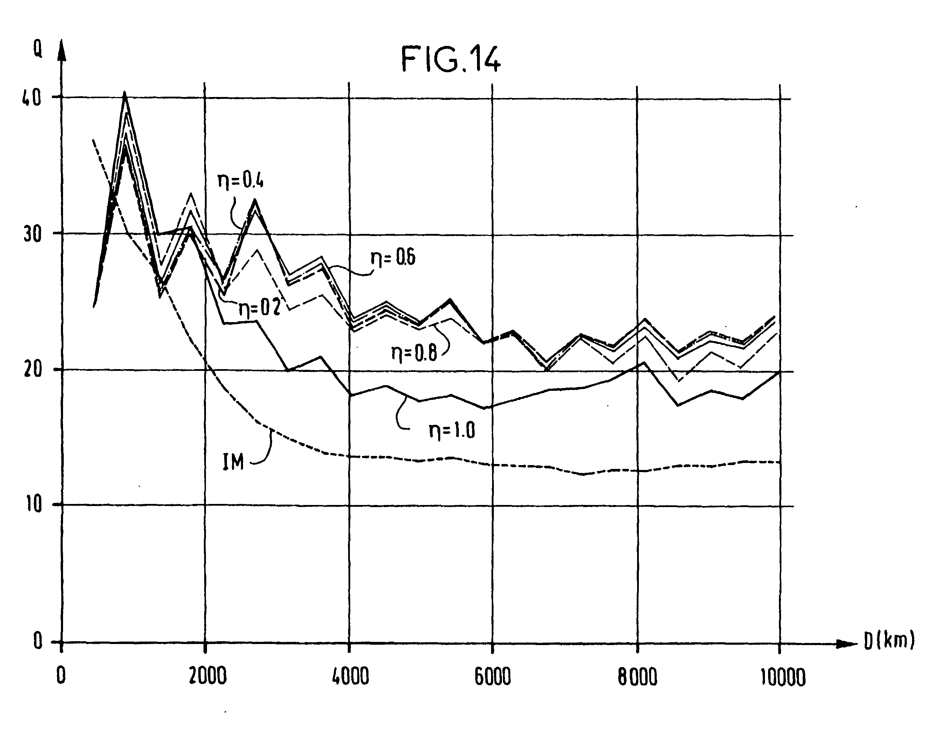

La figure 14 montre des résultats de simulation numérique du facteur de qualité Q en fonction de la longueur de liaison D sur des distances transocéaniques, pour différentes valeurs de la puissance de contrôle P_{C} appliquées en opposition de phase sur les deux entrées contrôle d'un NOLM du modulateur optique selon l'invention. Les courbes sont désignées par la valeur η_{eff} = P_{C1} + P_{C2} = 2P_{C} pour une puissance de signal de contrôle égale sur les deux entrées contrôle du NOLM selon l'invention. Une courbe lM donnant les résultats pour la modulation d'intensité uniquement est donnée à titre de comparaison.

Ces résultats sont à comparer avec ceux de la figure 13 pour démontrer les avantages de l'invention. Pour toutes les valeurs η, les facteurs de qualité Q sont supérieures à celle résultante de la modulation d'intensité pure (IM). Comme dans le cas de la figure 13, les valeurs élevées de η correspondent aux facteurs de qualité Q les moins importantes. D'autre part, pour toutes les valeurs η, les résultats sont meilleurs que dans le cas d'un contrôle simple comme montré dans la figure 13. Le dispositif de l'invention est également moins sensible aux variations de performances dues à l'environnement : température, vibrations, etc.

De plus, on constate que les résultats obtenus sont nettement moins sensibles aux valeurs de puissance de contrôle η, car pour toutes valeurs η ≤ 0,8 la qualité Q est quasiment la même. Ceci aura pour conséquence un autre avantage du dispositif de l'invention, en ce qui concerne les pertes d'insertion. En effet, les pertes d'insertion d'un dispositif de modulation ou de régénération en ligne sont critiques pour la distance de propagation sur fibre qui peut être tolérée entre ces dispositifs. Les pertes d'insertion d'un modulateur à électro-absorbtion, par exemple peuvent atteindre les 18 dB. Nous avons montré à l'aide de la figure 11 que les performances d'un modulateur NOLM à un contrôle sont meilleures en termes de la facteur de qualité Q, pour une puissance de contrôle rélativement faible, de l'ordre de η = 0.1 à 0.2. Or, pour des faibles puissances de contrôle, les pertes d'un NOLM sont les plus élévées, pouvant atteindre les 10 dB par exemple. En revanche, avec un NOLM à deux entrées contrôle, on peut utiliser une puissance de contrôle de l'ordre de η = 0,8 à 1,0, et les pertes d'iinsertion peuvent tomber aux alentours de 3 à 5 dB.

Les réalisations de l'invention qui ont été exposées ci-dessus ont été données à titre d'exemples non-limitatifs d'un modulateur optique NOLM à deux signaux de contrôle, qui permet une modulation d'amplitude et de phase qui sont contrôlables de façon indépendante sur une certaine plage de valeurs. L'homme de l'art saura décliner ce concept pour l'adapter à des multiples applications via des diverses réalisations, sans sortir pour autant du cadre de la présente invention, telle que défini par les revendications qui suivent.

## Revendications

1. Modulateur d'amplitude de signaux optique comprenant un miroir non-linéaire en boucle (NOLM) comprenant :
- une boucle (L) de fibre optique, ladite boucle (L) ayant une entrée signal (F1) et une sortie signal (F2),
- un premier coupleur optique (C1) d'entrée / sortie signal ayant un coefficient de couplage pour coupler ladite entrée (F1) et ladite sortie (F2) à ladite boucle (L),
- une première entrée contrôle (F3) et un deuxième coupleur optique (C2) pour coupler ladite première entrée contrôle (F3) à ladite boucle (L) afin de permettre l'injection d'un premier signal optique de contrôle dans ladite boucle (L) dans une première direction de propagation,
- des moyens pour fournir lesdits signaux optiques à moduler sur ladite entrée signal (F1) de ladite boucle (L), et
- des moyens de récupération d'horloge (CLK) pour former à partir desdits signaux optiques à moduler un signal d'horloge formant ledit premier signal optique de contrôle
**caractérisé en ce qu'**il comprend, en outre :
- une deuxième entrée contrôle (F5) et un troisième coupleur optique (C3) afin de permettre l'injection d'un deuxième signal optique de contrôle dans ladite boucle (L) dans une deuxième direction de propagation différente de ladite première direction,
et **en ce que** lesdits moyens de récupération d'horloge (CLK) sont destinés à former à partir desdits signaux optiques à moduler ledit deuxième signal optique de contrôle.

2. Modulateur optique selon la revendication 1, **caractérisé en ce qu'il** comprend en outre des moyens (ΔA) pour ajuster l'amplitude relative desdits premier et deuxième signaux optiques de contrôle.

3. Modulateur optique selon l'une quelconque des revendications 1 ou 2, **caractérisé en ce qu'il** comprend en outre des moyens (ΔΦ) pour ajuster la phase relative desdits premier et deuxième signaux optiques de contrôle.

4. Modulateur optique selon l'une quelconque des revendications 1 à 3, **caractérisé en ce qu'il** comprend en outre au moins une source optique (CLK) pour générer desdits premier et deuxième signaux optiques de contrôle.

5. Modulateur optique selon la revendication 4 **caractérisé en ce que** ladite au moins une source optique (CLK) est apte à générer un signal périodique de contrôle sinusoïdal.

6. Modulateur optique selon la revendication 5 **caractérisé en ce que** ladite au moins une source optique (CLK) est une source unique, et **en ce que** ledit modulateur comprend en outre un quatrième coupleur optique (C4) permettant de diviser ledit signal périodique de contrôle en deux pour créer ainsi lesdits premier et deuxième signaux optiques de contrôle.

7. Modulateur optique selon l'une quelconque des revendications 1 à 6, **caractérisé en ce que** la phase relative desdits premier et deuxième signaux optiques de contrôle est π.

8. Méthode de régénération de solitons dans laquelle des solitons à régénérer sont injectés sur l'entrée signal (F1) d'un miroir non-linéaire en boucle via un premier coupleur optique (C1) d'entrée / sortie ayant un coefficient de couplage tandis qu'un premier signal optique de contrôle est injecté dans le miroir non-linéaire en boucle dans une première direction de propagation via un deuxième coupleur optique (C2) afin de moduler lesdits solitons par ledit premier signal optique de contrôle et fournir lesdits solitons ainsi modulés via ledit premier coupleur optique (C1), **caractérisée en ce que** un deuxième signal optique de contrôle est injecté dans le miroir non-linéaire en boucle dans une deuxième direction de propagation via un troisième coupleur optique (C3), la deuxième direction de propagation étant différente de la première, et lesdits premier et deuxième signaux optiques de contrôle étant des signaux d'horloge formés à partir des solitons à régénérer et ayant un déphasage relatif approximativement de π.

9. Méthode selon la revendication 8, **caractérisée en ce que** lesdits premier et deuxième signaux optiques ont une forme sinusoïdale.

10. L'utilisation d'un modulateur optique selon l'une quelconque des revendications 1 à 7 pour la régénération de solitons.

11. L'utilisation d'un modulateur optique selon l'une quelconque des revendications 1 à 7 pour la modification des caractéristiques spectrales d'impulsions ("chirp").

## Patentansprüche

1. Optischer Amplitudenmodulator für Signale, der einen nichtlinearen Schlaufenspiegel (NOLM) umfasst, aufweisend:
- eine Schlaufe (L) aus einer Lichtleitfaser, wobei diese Schlaufe L einen Signaleingang (F1) und einen Signalausgang (F2) aufweist;
- einen ersten optischen Signaleingangs-/-ausgangskoppler (C1) mit einem Kopplungskoeffizienten, um diesen Eingang (F1) und diesen Ausgang (F2) mit der Schlaufe (L) zu koppeln;
- einen ersten Steuereingang (F3) und einen zweiten optischen Koppler (C2), um den ersten Steuereingang (F3) und die Schlaufe (L) zu koppeln, damit die Einspeisung eines ersten optischen Steuersignals in die Schlaufe (L) in einer ersten Ausbreitungsrichtung ermöglicht wird;
- Mittel, um diese zu modulierenden Signale an dem Signaleingang (F1) der Schlaufe (L) bereitzustellen; und
- Mittel zur Taktrückgewinnung (CLK), um ausgehend von diesen zu modulierenden optischen Signalen ein Taktsignal zu bilden, welches dieses erste optische Steuersignal bildet,
**dadurch gekennzeichnet, dass** er außerdem umfasst:
- einen zweiten Steuereingang (F5) und einen dritten optischen Koppler (C3), damit die Einspeisung eines zweiten optischen Steuersignals in die Schlaufe (L) in einer zweiten, von der ersten Richtung verschiedenen Ausbreitungsrichtung ermöglicht wird,
**sowie dadurch, dass** diese Taktrückgewinnungsmittel (CLK) dazu bestimmt sind, ausgehend von den zu modulierenden optischen Signalen dieses zweite optische Steuersignal zu bilden.

2. Optischer Modulator nach Anspruch 1, **dadurch gekennzeichnet, dass** er außerdem Mittel (ΔA) umfasst, um die relative Amplitude des ersten und zweiten optischen Steuersignals zu regulieren.

3. Optischer Modulator nach einem der Ansprüche 1 oder 2, **dadurch gekennzeichnet, dass** er außerdem Mittel (ΔΦ) umfasst, um die relative Phase des ersten und zweiten optischen Steuersignals zu regulieren.

4. Optischer Modulator nach einem der Ansprüche 1 bis 3, **dadurch gekennzeichnet, dass** er außerdem mindestens eine optische Quelle umfasst, um dieses erste und zweite optische Steuersignal zu generieren.

5. Optischer Modulator nach Anspruch 4, **dadurch gekennzeichnet, dass** diese mindestens eine optische Quelle (CLK) dazu geeignet, ein sinusförmiges periodisches Steuersignal zu generieren.

6. Optischer Modulator nach Anspruch 5, **dadurch gekennzeichnet, dass** diese mindestens eine optische Quelle (CLK) eine einzige Quelle ist, **sowie dadurch, dass** der Modulator außerdem einen vierten optischen Koppler (C4) umfasst, welcher es ermöglicht, das periodische Steuersignal durch zwei zu teilen, um so das erste und zweite optische Steuersignal zu erzeugen.

7. Optischer Modulator nach einem der Ansprüche 1 bis 6, **dadurch gekennzeichnet, dass** die relative Phase des ersten und zweiten optischen Steuersignals π ist.

8. Verfahren zur Solitonenregeneration, bei dem zu regenerierende Solitonen am Signaleingang (F1) eines nichtlinearen Schlaufenspiegels über einen ersten optischen Eingangs-/Ausgangskoppler (C1) mit einem Kopplungskoeffizienten eingespeist werden, während ein erstes optisches Steuersignal in den nichtlinearen Schlaufenspiegel in einer ersten Ausbreitungsrichtung über einen zweiten optischen Koppler (C2) eingespeist wird, um die Solitonen durch das erste optische Steuersignal zu modulieren und die auf diese Weise modulierten Solitonen über den ersten optischen Koppler (C1) zu liefern, **dadurch gekennzeichnet, dass** ein zweites optisches Steuersignal in den nichtlinearen Schlaufenspiegel in einer zweiten Ausbreitungsrichtung über einen dritten optischen Koppler (C3) eingespeist wird, wobei die zweite Ausbreitungsrichtung sich von der ersten unterscheidet und wobei das erste und das zweite optische Steuersignal Taktsignale sind, die ausgehend von den zu regenerierenden Solitonen gebildet werden, und wobei sie eine relative Phasenverschiebung von ungefähr π aufweisen.

9. Verfahren nach Anspruch 8, **dadurch gekennzeichnet, dass** das erste und das zweite optische Signal eine Sinusform aufweisen.

10. Nutzung eines optischen Modulators nach einem der Ansprüche 1 bis 7 zur Solitonenregeneration.

11. Nutzung eines optischen Modulators nach einem der Ansprüche 1 bis 7 zur Veränderung der Spektraleigenschaften von Impulsen ("Chirp").

## Claims

1. An optical signal amplitude modulator comprising a non-linear optical loop mirror or "NOLM", including:
- an optical fiber loop (L), said loop (L) having a signal inlet (F1) and a signal outlet (F2);
- a first signal inlet/outlet optical coupler (C1) having a coupler coefficient for coupling said inlet (F1) and said outlet (F2) to said loop (L);
- a first control inlet (F3) and a second optical coupler (C2) for coupling said first control inlet (F2) to said loop (L) in order to enable a first control optical signal to be injected into said loop (L) in a first propagation direction;
- means for providing said optical signals for modulating on said signal inlet (F1) of said loop (L); and
- clock recovery means (CLK) in order to form a dock signal making up said first optical control signal, on the basis of said optical signals for modulating;
the modulator being **characterized in that** it further includes:
- a second control inlet (F5) and a third optical coupler (C3) in order to enable a second optical control signal to be injected into said loop (L) in a second propagation direction different from said first direction,
and **in that** said clock recovery means (CLK) are intended to form said second optical control signal, on the basis of said optical signals for modulating.

2. An optical modulator according to claim 1, **characterized in that** it further includes means (ΔA) for adjusting the relevant amplitude of said first and second optical control signals.

3. An optical modulator according to claim 1 or 2, **characterized in that** it further includes means (ΔΦ) for adjusting the relative phase of said first and second optical control signals.

4. An optical modulator according to any one of claims 1 to 3, **characterized in that** it further includes at least one light source (CLK) for generating said first and second optical control signals.

5. An optical modulator according to claim 4, **characterized in that** said at least one light source (CLK) is adapted to generate a periodic control signal that is approximately or substantially sinusoidal.

6. An optical modulator according to claim 5, **characterized in that** said at least one light source (CLK) is a single source, and **in that** said modulator further includes a fourth optical coupler (C4) enabling said periodic control signal to be split into two, thereby creating said first and second optical control signals.

7. An optical modulator according to any one of claims 1 to 6, **characterized in that** the relative phase between said first and second optical control signals is π.

8. A method of regenerating solitons in which solitons to be regenerated are injected to the signal inlet (F1) of a non-linear optical loop mirror via a first inlet/outlet optical coupler (C1) having a coupling coefficient, while a first optical control signal is injected into the non-linear optical loop mirror in a first propagation direction via a second optical coupler (C2) in order to modulate said solitons by said first optical control signal and to deliver said solitons modulated in this way via said first optical coupler (C1), the method being **characterized in that** a second optical control signal is injected into the non-linear optical loop mirror in a second propagation direction via a third optical coupler (C3), the second propagation direction being different from the first, and said first and second optical control signals being clock signals made up of solitons to be regenerated and having a relative phase shift of approximately π.

9. A method according to claim 8, **characterized in that** said first and second optical signals have a waveform that is sinusoidal.

10. The use of an optical modulator apparatus according to any one of claims 1 to 7 for regenerating solitons.

11. The use of an optical modulator according to any one of claims 1 to 7 for modifying the spectral characteristics of pulses ("chirp").
